# EUROPEAN PATENT SPECIFICATION

(11) **EP 2 900 609 B1**
(45) Date of publication and mention of the grant of the patent: **07.03.2018**
(21) Application number: 13842124.3
(22) Date of filing: 10.09.2013
(51) Int. Cl.: C03B 33/02, C03B 17/06

(54) **METHODS OF PROCESSING A CONTINUOUS GLASS RIBBON**
VERFAHREN ZUR BEARBEITUNG EINES GLASBANDES
PROCÉDÉS DE TRAITEMENT D'UN RUBAN CONTINU DE VERRE

(30) Priority: 25.09.2012 US 201261705266 P
(43) Date of publication of application: 05.08.2015
(73) Proprietor: Corning Incorporated, Corning, New York 14831 (US)
(72) Inventor: FLEMING, Todd Benson, Elkland, Pennsylvania 16920 (US); MARSHALL, Dale Charles, Brockport, New York 14420 (US); MERZ, Gary Edward, Rochester, New York 14610 (US); MILLER, Eric Lee, Lawrenceville, Pennsylvania 16929 (US); OTT, Terry Jay, Lancaster, Kentucky 40444 (US); RHOADS, Christopher Michael, Seattle, Washington 98133 (US)
(74) Representative: Kingsbury, Oliver William
(86) International application number: PCT/US2013/058880
(87) International publication number: WO 2014/051984

(56) References cited:
- EP-A1- 2 277 835
- EP-A1- 2 505 566
- WO-A1-00/41978
- WO-A1-2013/025741
- JP-A- 2004 026 534
- JP-A- 2004 035 381
- JP-A- 2012 131 661
- US-A1- 2005 103 054
- US-A1- 2012 024 929
- US-A1- 2012 131 962
- DATABASE WPI Week 201141 23 June 2011 (2011-06-23) Thomson Scientific, London, GB; AN 2011-G99088 XP002759176, -& JP 2011 121791 A (NIPPON ELECTRIC GLASS CO) 23 June 2011 (2011-06-23)

## Description

### TECHNICAL FIELD

The present disclosure relates to methods of processing continuous ribbons of glass and, more particularly, to methods of processing continuous ribbons of glass along a travel path.

### BACKGROUND

The processing of continuous ribbons of glass can involve unique considerations. For example, glass used in display devices, electrophoretic displays, flat panel displays, and flexible photovoltaic devices, advantageously may be very thin, and the processing of continuous glass ribbons to produce glass of the requisite thinness can present special processing issues.

EP 2 505 566 A1 discloses methods of fabricating a glass ribbon comprising the step of bending a glass ribbon in a cutting zone to provide a bent target segment with a bent orientation in the cutting zone.

WO 2013/025741 A1 discloses methods of severing a glass ribbon comprising the step of impacting a first side of a glass ribbon with fluid emitting from a support member to at least partially support a weight of a portion of glass ribbon within a severing zone while maintaining the portion of the glass ribbon in a first orientation.

US 2012/131962 A1 discloses a cleaving apparatus holding at least one surface (effective surface) of a band-like glass film in a non-contact state to suppress a situation that wavy portions reach a region in which the band-like glass film is to be cleaved.

WO 00/41978 A1 discloses a glass-plastic composite film and a method for producing same.

US 2005/103054 A1 discloses a method of supplying a glass ribbon in a molten state to be supplied from a glass melting furnace to a flat glass forming apparatus.

### SUMMARY

The method of processing a continuous glass ribbon according to the invention comprises the step (I) of drawing a portion of a glass ribbon from a forming member into a draw zone located downstream from the forming member so as to produce a first selected thickness in the glass ribbon. The method further comprises the step (II) of passing the portion of the glass ribbon having the first selected thickness to a first location downstream from the draw zone. The method further includes the step (III) of reducing the thickness of the glass ribbon at the draw zone to a second selected thickness that is less than the first selected thickness while advancing the glass ribbon to the first location. The method also includes the step (IV) of separating the glass ribbon at the first location after the second selected thickness is reached at the first location so as to create an initial leading end in the glass ribbon having the second selected thickness. The method further includes the step (V) of feeding the initial leading end of the glass ribbon through the first location to a second location downstream from the first location. The method also includes the step (VI) of reducing the thickness of the glass ribbon at the draw zone to a final predetermined thickness that is less than the second selected thickness while the glass ribbon is advanced to the second location. The method further includes the step (VII) of separating the glass ribbon at the second location after the final predetermined thickness is reached at the second location to create a final leading end in the glass ribbon having the final predetermined thickness. The method still further includes the step (VIII) of passing the final leading end of the glass ribbon through the second location to a third location downstream from the second location. Optionally, a travel path of the glass ribbon is changed from a draw direction in the draw zone to a transitional direction in the transition zone, and as the glass ribbon passes through the transition zone, an upstream area of the glass ribbon is bent such that a first surface of the glass ribbon is at the upstream area is in compression and a downstream area of the glass ribbon is bent such that the first surface of the glass ribbon at the downstream area is in tension. The first surface of an intermediate area of the glass ribbon between the upstream area and the downstream area is substantially free of compressive and tensile forces.

In one example the method includes the steps of placing a first surface of the glass ribbon in compression upstream of the first location and placing the first surface of the glass ribbon in tension at the first location. For example, the method can include creating a surface defect at a preselected location in the first surface of the glass ribbon at which the first surface is in compression. For instance, the method can further comprise the step of passing the surface defect to the first location such that the preselected location of the defect is placed in tension, thereby resulting in breaking the glass ribbon along a break path passing through the location of the defect in a direction transverse to the travel path of the glass ribbon to separate the glass ribbon.

In another example the glass ribbon having the final predetermined thickness is collected at the third location. For instance, collecting the glass ribbon can comprise rolling the glass ribbon to form a roll of the glass ribbon.

### BRIEF DESCRIPTION OF THE DRAWINGS

The foregoing and other aspects, embodiments and examples are better understood when the following detailed description is read with reference to the accompanying drawings, in which:
**FIG. 1** is a schematic side view of one embodiment of an apparatus that can be applied in an example of a method of processing a continuous glass ribbon;
**FIG. 2** is a cutaway plan view of a section of the apparatus of **FIG. 1****;**
**FIG. 3** is a schematic side view of another embodiment of an apparatus that can be applied in an example of a method of processing a continuous glass ribbon; and
**FIG. 4** is a cutaway top view of a section of the apparatus of **FIG. 3****.**

### DETAILED DESCRIPTION

Aspects, embodiments and examples will now be described more fully hereinafter with reference to the accompanying drawings in which the aspects, embodiments and examples are shown. Whenever possible, the same reference numerals are used throughout the drawings to refer to the same or like parts.

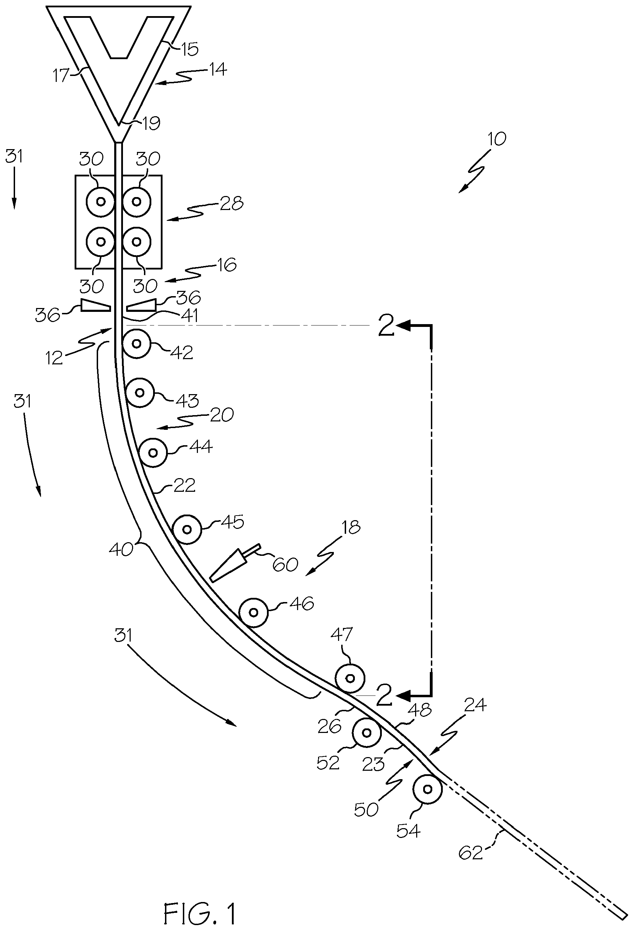

Referring now to **FIG. 1****,** an embodiment of a glass ribbon processing apparatus **10** is schematically illustrated for purposes of reference with respect to the descriptions to follow concerning aspects, embodiments and examples of methods of processing continuous ribbons of glass. In one aspect, the glass ribbon processing apparatus **10** can be used generally in a glass ribbon processing system, and, in another aspect, processing apparatus generally similar to certain portions of the glass ribbon processing apparatus **10** can be employed to continuously produce thin, flexible glass for example glass that is used in products like electrophoretic displays, flat panel displays and flexible photovoltaics. It is not unusual to use glass having a thickness of 0.35 mm or less in the manufacture of these products. Heretofore, such glass has largely been produced in sheet form, but there are distinct advantages associated with producing thin glass on a continuous basis wherein the glass after it exits a processing line is formed into a roll by being wound on a spool for example. Manufacturers of products that use thin glass can find it useful to employ production procedures using continuous glass ribbons that have been collected in rolls rather than using glass sheets.

According to one aspect, **FIG. 1** illustrates a method of processing a continuous glass ribbon **12** comprising the steps of drawing a portion of the glass ribbon from a forming member **14** into a draw zone **16** located downstream from the forming member **14** and passing the portion of the glass ribbon through a transition zone **18** downstream from the draw zone **16,** wherein a travel path of the glass ribbon is changed from a draw direction in the draw zone **16** to a transitional direction in the transition zone **18.** As the glass ribbon **12** passes through the transition zone **18,** an upstream area **20** of the glass ribbon is bent such that a first surface **22** of the glass ribbon at the upstream area is in compression and a downstream area **24** of the glass ribbon is bent such that the first surface **22** of the glass ribbon at the downstream area **24** is in tension. The first surface **22** of an intermediate area **26** of the glass ribbon **12** between the upstream area **20** and the downstream area **24** is substantially free of compressive and tensile forces.

In one embodiment for performing the method described in the previous paragraph, an example of a forming member **14** that can comprise a source of the glass ribbon **12** that is processed in the apparatus **10** while proceeding along a travel path in the direction of the directional arrows **31** includes a glass-forming wedge **15** located at the bottom of a trough **17.** In operation, molten glass overflows the trough **17** and flows down opposite sides of the glass-forming wedge **15.** The two flows of glass that are formed are fused together to form the glass ribbon **12** as they are drawn off a root **19** of the glass-forming wedge **15** by a fusion draw machine **28.** The fusion draw machine **28** draws a portion of the glass ribbon **12** from the forming member **14** into the draw zone **16** that is located downstream from the forming member **14** and passes the portion of the glass ribbon to the transition zone **18** along the travel path of the glass ribbon. In the illustrated example, the fusion draw machine **28** includes two pairs of rollers **30** that are positively driven and engage the glass ribbon **12** so as to both draw a portion of the glass ribbon from the forming member **14** into the draw zone **16** and pass the portion of the glass ribbon into and through the transition zone **18** along the travel path of the glass ribbon.

Glass cutting equipment **36,** for example a traveling anvil machine can be located downstream of the fusion draw machine **28.** The glass cutting equipment **36** is positioned downstream of the forming member **14** at a location at which the glass ribbon **12** is sufficiently solid enough to be cut by the glass cutting equipment. The cutting of the glass ribbon **12** by the glass cutting equipment 36 can provide a straight lead end to the glass ribbon, thereby facilitating the entry of the glass ribbon into equipment located at the transition zone **18.**

As the fusion draw machine **28** continues to draw the glass ribbon **12** from the forming member **14** and advances the glass ribbon along the travel path of the glass ribbon, the lead end of the glass ribbon formed by the cutting of the glass ribbon by the glass cutting equipment **36** is directed to an entry point **41** of a conveying apparatus **40** located in the transition zone **18.** The travel path of the glass ribbon is changed from the draw direction at the draw zone **16** to the transitional direction in the transition zone **18** as described in greater detail below. The draw direction need not be arranged in the substantially vertical attitude shown in the illustrated embodiment of **FIG. 1** and can be arranged in other directional attitudes.

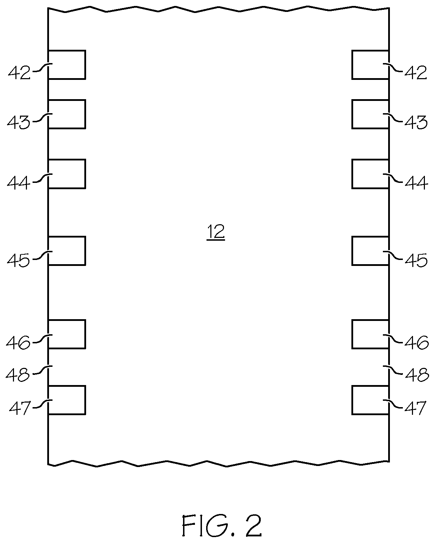

The conveying apparatus **40** comprises a series of pairs of rollers **42, 43, 44, 45, 46** and **47** that engage only the lateral margins **48** at the first surface **22** of the glass ribbon **12** as best seen in **FIG. 2****.** The pair of rollers **42** is located substantially at the entry end **41** of the conveying apparatus **40** and the pair of rollers **47** are located substantially at the exit end **48** of the conveying apparatus with the pairs of rollers **43, 44, 45** and **46** being located intermediately of the pairs of rollers **42** and **47.** The pairs of rollers **42** through **47** may be arranged in substantially a smooth curve that extends from the entry end **41** of the conveying apparatus **40** to the exit end **48** of the conveying apparatus.

In some examples, the plurality of rollers may be spaced apart from one another at incrementally greater distances in the direction of the travel path. For example, as shown in **FIG. 2****,** the plurality of pairs of rollers **42** through **47** may be positioned so that the spacing between adjacent pairs of rollers is increasingly greater in the direction from the pair of rollers **42** at the entry end **41** of the conveying apparatus **40** to the pair of rollers **47** at the exit end **48** of the conveying apparatus **40.** Thus, the spacing between the pair of rollers **43** and the pair of rollers **44** is greater than the spacing between the pair of rollers **42** and the pair of rollers **43** and the spacing between the pair of rollers **44** and the pair of rollers **45** is greater than the spacing between the pair of rollers **43** and the pair of rollers **44,** and so on. As such, a minimum number of rollers may be provided while still avoiding segmentation of the glass web. Indeed, providing equal spaced rollers at the minimum spacing shown in **FIG. 2** (e.g., between the pair of rollers **42** and the pair of rollers **43)** would avoid segmentation by providing sufficient support throughout the curved portion. However, providing the minimum spacing throughout the curvature may require extra pairs of rolls that are not needed. On the other hand, providing equal spaced rolls with the maximum pacing shown in **FIG. 2** (e.g., between the pair of rollers **46** and the pair of rollers **47)** would reduce the number of pairs of rollers used but may result in segmentation since sufficient support is not provided at areas experiencing higher forces from the glass ribbon **12.** As such, by sequentially increasing the space between the rollers as discussed above, the number of pairs of rollers can be minimized while still providing a sufficient number of pairs of rollers to avoid segmentation of the glass ribbon.

As the glass ribbon **12** passes through the transition zone **18,** the upstream area **20** of the glass ribbon is bent as a result of the engagement of the glass ribbon with the rollers **42** through **47** in the conveying apparatus **40** such that the first surface **22** of the glass ribbon is in compression. Thus, the upstream area **20** of the glass ribbon **12** is bent such that the first surface **22** at the upstream area **20** of the glass ribbon comprises a concave surface. The bending of the glass ribbon **12** forms the glass ribbon into an arc extending in the longitudinal direction of the glass ribbon **12,** as opposed to an arc disposed across the width direction of the glass ribbon **12.** As shown in **FIG. 1****,** the width direction of the glass ribbon is perpendicular to the plane of the page, whereas the longitudinal direction generally follows the direction of arrows **31.**

Located downstream of the conveying apparatus **40** in the transition zone **18** is a backbending device **50** that, in the illustrated embodiment, comprises backbending rollers **52** and **54.** The backbending rollers **52** and **54** engage a second surface **23** of the glass ribbon **12** opposite the first surface **22.** More specifically, the backbending rollers **52** and **54** are arranged substantially adjacent to and downstream of the exit end **48** of the conveying apparatus **40** in a manner to engage the second surface **23** of the glass ribbon **12** with sufficient force whereby the downstream area **24** of the glass ribbon **12** is bent such that the first surface **22** of the glass ribbon at the downstream area **24** is in tension. Thus, the downstream area **24** of the glass ribbon **12** is bent such that the first surface **22** at the downstream area **24** of the glass ribbon comprises a convex surface. As a corollary, the backbending rollers **52** and **54,** in the example embodiment, comprise at least one second guide member configured to engage a second surface **23** of the glass ribbon **12** to bend the downstream area **24** of the glass ribbon. Similarly to the conveying apparatus **40,** the backbending device **50** generally bends the glass ribbon **12** into an arc extending in the longitudinal direction of the glass ribbon **12,** as opposed to a direction across the width of the glass ribbon **12.**

When the first surface **22** of the glass ribbon **12** at the upstream area **20** in the conveying apparatus **40** is in compression and the first surface **22** of the glass ribbon **12** at the downstream area **24** at the backbending rollers **52** and **54** is in tension, as has been described in the example embodiment, the intermediate area **26** of the glass ribbon **12** between the upstream area **20** and the downstream area **24** is substantially free of compressive and tensile forces. Stated another way, the intermediate area **26** of the glass ribbon **12** encompasses an inflection point where the first surface **22** transitions from being concave in the conveying apparatus to being convex in the backbending device **50.** The intermediate area **26** can act as a potential barrier to propagation of potential catastrophic cracks up the glass ribbon, i.e., in a direction opposite to directional arrows **31** along the travel path. Indeed, cracks along a longitude of the ribbon tending to split the ribbon have a tendency to propagate along the glass ribbon in a direction opposite to the travel path of the glass ribbon **12,** i.e., opposite to the directional arrows **31.** However, such cracks, when formed in the backbending device **50,** or downstream thereof, would tend to end at the intermediate area **26** that is substantially free of compressive and tensile forces; thereby avoiding potential catastrophic failures in the glass ribbon **12.**

It will be understood, based on the foregoing discussion, that the first surface **22** of the glass ribbon **12** at the upstream area **20** is urged into engagement with the pairs of rollers **42** through **47** as a result of the upward force imparted to the glass ribbon **12,** somewhat laterally of the conveying apparatus **40,** by the backbending rollers **52** and **54** together with the weight of the ribbon extending from the backbending device **50.** Although **FIG. 1** illustrates the first surface **22** of the glass ribbon **12** as contacting all of the pairs of rollers **42** through **47,** there can be instances when this is not the case. For example, on occasion, the upward force imparted to the glass ribbon **12** by the rollers **52** and **54** may not be entirely sufficient to urge complete engagement of the first surface **22** of the glass ribbon **12** at the upstream area **20** with the pairs of rollers **42** through **47.** In any event, however, in the example embodiment, the pairs of rollers **42** through **47** comprise at least one first guide member configured to optionally engage the first surface **22** of the glass ribbon **12** to maintain a minimum radius of the upstream area **20** of the glass ribbon **12.**

By establishing, in the glass ribbon **12,** the upstream area **20** in which the first surface **22** is in compression and the downstream area **24** in which the first surface is in tension, an example embodiment of a method for separating the glass ribbon transversely of the travel path of the glass ribbon is provided. The method of separation comprises the step of creating a surface defect at a preselected location in the first surface **22** of the glass ribbon **12** in the upstream area **20** at which the glass ribbon is in compression. As best seen in **Fig. 1****,** a device, for example, an abrasive wheel **60** located within the conveying apparatus **40** is used to score the first surface **22** of the glass ribbon **12** at the upstream area **20,** and the scoring of the glass ribbon creates the surface defect at the preselected location. Following the creation of the surface defect, an example embodiment of a method of separating the glass ribbon can comprise passing the surface defect from the upstream area **20** to the downstream area **24** such that the first surface **22** at a location of the defect is placed in tension in the downstream area **24,** thereby resulting in breaking the glass ribbon along a break path passing through the location of the defect in a direction transverse to the travel path of the glass ribbon to separate the glass ribbon. More specifically, as the first surface **22** with the defect passes from the upstream area **20,** where the first surface is in compression, to the downstream area **24,** where the first surface is in tension, the defect will act to initiate a split of the glass ribbon through the defect. In the example embodiment of **FIG. 1****,** the portions of the glass ribbon that are separated from the main body of the glass ribbon at the backbending device **50** are shown at **62.**

The backbending device **50** advantageously uses gravity to form the convex bend in the glass ribbon, whereby the backbending device **50** may be made in a simple, low-cost, manner. That is, the weight of the glass ribbon **12,** as it extends over backbending roller **54** and downward therefrom applies a pulling force on the glass ribbon **12.** The pulling force thusly generated tends to pull the glass ribbon **12** into contact with the rollers of the guide device **40** and the backbending rollers **52, 54.** Further, the weight of the glass ribbon **12** and pulling force generated thereby bends the glass ribbon through the backbending device **50,** e.g., around roller **54,** to such a degree (i.e., to an arc of sufficiently tight radius) as to propagate the surface defect through the thickness of the glass as well as across the width of the glass ribbon **12.** Accordingly, there is no need to apply forces via additional equipment to the glass ribbon to bend it to the degree necessary to form the separation across the width of the glass ribbon.

In an additional example embodiment of a method of processing the continuous glass ribbon **12,** referring once again to **FIG. 1****,** the method comprises the steps of drawing a portion of the glass ribbon **12** from the forming member **14** into the draw zone **16** located downstream from the forming member **14** and passing the portion of the glass ribbon through the transition zone **18** downstream from the draw zone **16,** wherein a travel path of the glass ribbon is changed from a draw direction in the draw zone **16** to a transitional direction in the transition zone **18.** As the glass ribbon **12** passes through the transition zone **18,** the glass ribbon is constrained to have a minimum bend radius but is free to bend at radii larger than the minimum bend radius such that the first surface **22** of the glass ribbon is placed in compression. Thus, as described previously, as the glass ribbon **12** passes through the conveying apparatus **40** in the transition zone **18,** the pairs of rollers **42** through **47,** the locations of which are fixed, comprise at least one guide member that is configured to maintain the minimum bend radius in the additional example embodiment. In other words, by engaging the first surface **22** of the glass ribbon **12,** the glass ribbon is prevented from assuming a bend radius smaller than the bend radius established by the pairs of rollers **42** through **47.** At the same time, the glass ribbon **12,** because there is no constraining apparatus imposing on the second surface **23,** is free to move away from the pairs of rollers **42** through **47,** and bend at radii larger than the minimum bend radius in the conveying apparatus **40,** as might be the case, for example, in the event the upward force imparted to the glass ribbon **12** by the pair of backbending rollers **52** and **54** may not be entirely sufficient to urge complete engagement of the first surface **22** of the glass ribbon **12** at the upstream area **20** with all of the pairs of rollers **42** through **47.** In any event, however, whatever radius is assumed by the glass ribbon in the conveying apparatus **40,** the first surface **22** of the glass ribbon will be placed in compression.

In this additional example embodiment, the pairs of rollers **42** through **47,** in addition to comprising at least one guide member configured to maintain the minimum bend radius, also comprise at least one guide member configured to engage the first surface **22** of the glass ribbon **12** to maintain the minimum bend radius. Additionally, in the transition zone **18,** only the first surface **22** of the glass ribbon **12** engages the at least one guide member to maintain the minimum bend radius. It is also the case in this additional example embodiment that, in the transition zone **18,** the pairs of rollers **42** through **47** comprise a plurality rollers that provide a force profile to maintain the minimum bend radius and that the pairs of rollers **42** through **47** comprise a plurality of guide members that provide a force profile to maintain the minimum bend radius.

This additional example embodiment also can include the step of creating a surface defect at a preselected location in the first surface **22** of the glass ribbon **12** at which the first surface of the glass ribbon is in compression as has been described above with respect to other example embodiments for example. Further the additional example embodiment also can include the step of bending the glass ribbon **12** to place the first surface **22** of the glass ribbon in tension at the location of the defect, thereby resulting in breaking the glass ribbon **12** along a break path passing through the location of the defect in a direction transverse to the travel path of the glass ribbon to separate the glass ribbon also as has been described above with respect to other example embodiments for example.

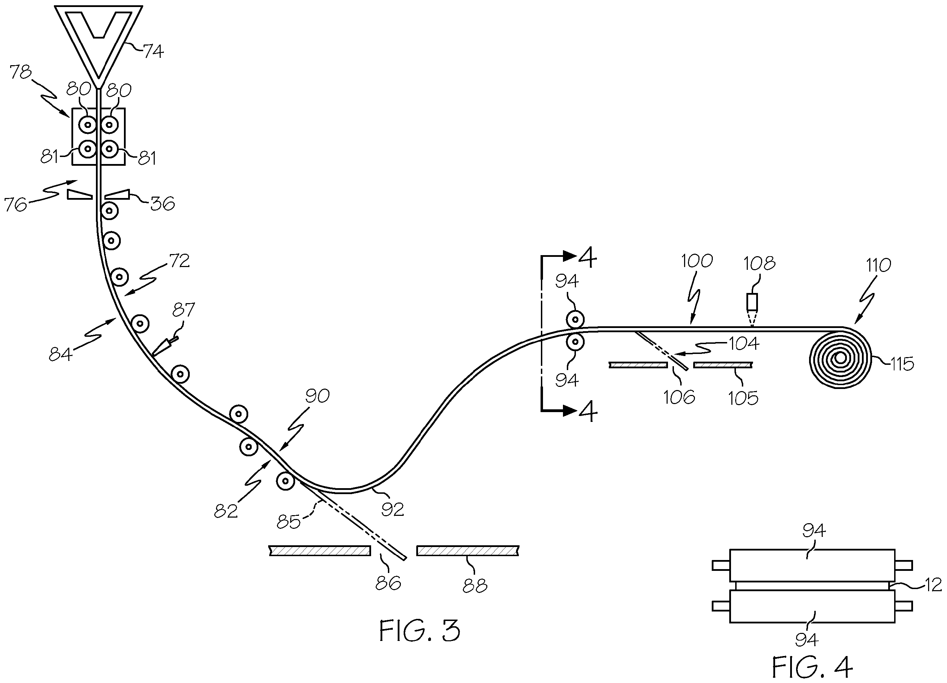

The example embodiments that have been described above possess utility in and of themselves without reference to their use in connection with other methods of processing glass ribbon. However, certain of the principles applied in those example embodiments also can be applied in the latter context, for example, in the production of thin glass ribbons in a glass ribbon processing system. In that example embodiment, a continuous glass ribbon is processed first through a draw zone and then through a transition zone to and through a processing zone as is illustrated in **FIG. 3****.**

In **FIG. 3****,** the example embodiment of a method of processing a continuous glass ribbon **72** to produce a thin glass ribbon comprises drawing a portion of the glass ribbon from the forming member **74** in a first direction into a draw zone **76** located downstream from the forming member **74,** so as to produce a first selected thickness in the glass ribbon; passing the portion of the glass ribbon having the first selected thickness to a first location **90;** reducing the thickness of the glass ribbon at the draw zone **76** to a selected thickness while advancing the glass ribbon to the first location **90;** separating the glass ribbon at the first location **90** after the second selected thickness is reached at the first location **90** to create an initial leading end in the glass ribbon having the second selected thickness; feeding the initial leading end of the glass ribbon through the first location **90** to a second location **100** downstream from the first location **90** where the glass ribbon is advanced along a travel path in a second direction; reducing the thickness of the glass ribbon at the draw zone **76** to a final predetermined thickness that is less than the second selected thickness while advancing the glass ribbon **72** to the second location **100;** separating the glass ribbon at the second location **100** after the final predetermined thickness is reached at the second location **100** to create a final leading end in the glass ribbon having the final predetermined thickness; and passing the final leading end of the glass ribbon **72** to a third location **110** downstream from the second location **100.**

The forming member **74** can comprise an apparatus like and perform the same functions as the forming member **14** described above with reference to **FIG. 1****.** Additionally, the glass ribbon **72** can be drawn into the draw zone **76** by a fusion draw machine **78** that is located downstream of the forming member **74** and comprises a first pair of rollers **80** and a second pair of rollers **81.** The second pair of rollers **81** is configured to reduce the thickness of the glass ribbon **72** to the first selected thickness, the second selected thickness and the final predetermined thickness as the first pair of rollers **80** initially consolidates and draws the glass ribbon through the gap between the first pair of rollers. Both the pair of rollers **80** and **81** aid in advancing the glass ribbon **72** along the travel path of the glass ribbon. The second pair of rollers **81** is configured to reduce the thickness of the glass ribbon **72** to the first thickness, the second thickness and the final predetermined thickness by the adjustment of the gap or spacing between the second pair of rollers **81** through which the glass ribbon passes, and/or by adjustment of the speed at which the rollers **81** rotate relative to the rotational speed of the rollers **80** (assuming there is no slip between the rollers **80, 81** and the glass ribbon). Thus, the first pair of rollers **80** compresses the glass ribbon **72** sufficiently to consolidate and engage the glass ribbon as it passes along the travel path of the glass ribbon, and the second pair of rollers **81** reduces the thickness of the glass ribbon thereafter to a second selected thickness that can be approximately 0.50 mm thick in the processing of the glass ribbon to produce thin glass, and ultimately to a final predetermined thickness of ≤ 0.35 mm, for example, 0.35, 0.3, 0.25, 0.2, 0.15, 0.1, 0.075, 0.060, 0.050, 0.040, 0.030, 0.020, or 0.01 mm.

Apparatus configured to separate the glass ribbon **72** at the first location **90** and create an initial leading end in the glass ribbon having the second selected thickness can comprise, as illustrated in the example embodiment of **FIG. 3****,** a backbending device **82** like the backbending device **50** disclosed with reference to the example embodiment of **FIG. 1****.** Should such a backbending device **82** be used to separate the glass ribbon, typically, it would be employed together with a conveying apparatus **84** of a type as illustrated at **40** in **FIG. 1****;** and as disclosed above with reference to the example embodiment of **FIG. 1****,** an abrasive wheel **87** or the like would be provided for the purpose of creating surface defects in the glass ribbon at which the glass ribbon could be separated as discussed above in connection with **FIG. 1****.**

In the example embodiment of **FIG. 3****,** discrete sections **85** of the glass ribbon that could be of a length of 16 inches (410 mm) or so would be continuously separated from the leading end of the glass ribbon **72** at the location of the surface defects created in the glass ribbon **72** until after the glass ribbon having the second selected thickness reached the first location 90. These discrete sections of the glass ribbon would be disposed of by being directed to an opening **86** in a cullet chute **88** for example.

After glass ribbon having the second selected thickness is reached at the first location **90** and an initial leading end in the glass ribbon **72** having the second selected thickness is created, the initial leading end of the glass ribbon is fed through the first location **90** to the second location **100** downstream from the first location. In feeding the initial leading end of the glass ribbon **72** to the second location **100,** whether manually or otherwise, the glass ribbon is allowed to assume somewhat of a freely suspended configuration between the first location **90** and pinch rollers **94** that engage the glass ribbon **72** downstream of the first location **90** and upstream of the second location **100.** As a result, the travel path of the glass ribbon **72** between the first location **90** and the pinch rollers **94,** rather than comprising a straight travel path, comprises a sagging travel path more or less as shown at **92** in the example embodiment of **FIG. 3****.** The pinch rollers **94** are positively driven so that, once the initial leading end of the glass ribbon **72** is advanced to the pinch rollers, the pinch rollers comprise the primary means for advancing the glass ribbon along the path of travel of the glass ribbon from the first location **90** to and through the second location **100.**

As the glass ribbon **72** is fed to the second location **100,** the thickness of the glass ribbon is reduced at the draw zone **76** by the rollers **81** to the final determined thickness that is less than the second selected thickness while the glass ribbon is advanced to the second location **100.** After glass ribbon having the final predetermined thickness is reached at the second location **100,** the glass ribbon is separated at the second location to create a final leading end in the glass ribbon having the final predetermined thickness. The final predetermined thickness of the glass ribbon in the example embodiment can comprise a thickness of ≤ 0.35 mm (for example, 0.35, 0.3, 0.25, 0.2, 0.15, 0.1, 0.075, 0.060, 0.050, 0.040, 0.030, 0.020, or 0.01 mm) which represents a thickness suitable for applications in which thin glass may be beneficially used as in electrophoretic displays, flat panel displays and flexible photovoltaic devices, for example.

Equipment is located at the second location **100** for periodically separating discrete sections **104** of the glass ribbon from the body of the glass ribbon until after glass ribbon having the final determined thickness is reached at the second location and a final leading end in the glass ribbon having the final predetermined thickness is created. The equipment can comprise most any type of glass cutting equipment employed on glass ribbon processing lines for example a traveling anvil machine, mechanical or laser scoring or cutting equipment. As the discrete sections **104** of the glass ribbon **72** are separated from the body of the glass ribbon, they are allowed to fall into an opening **106** in a cullet bin **105.**

The final leading end of the glass ribbon **72** is passed to a third location **110** downstream from the second location **100** and the glass ribbon having the final predetermined thickness is collected at the third location. In the example embodiment, the method of collecting the glass ribbon comprises rolling the glass ribbon to form a roll **115** of the glass ribbon as shown in **FIG. 3****.** In the example embodiment collecting of the glass ribbon **72** at the third location **110** can comprise rolling the advancing glass ribbon onto a spool to form a roll and then separating the roll from the advancing glass ribbon. More specifically, the glass ribbon **72** can be rolled onto a first spool and as the glass ribbon collects on the first spool and reaches the maximum dimensions suitable for handling in an efficient manner, cutting equipment at the first spool separates the glass ribbon being advanced to the first spool from the glass ribbon that has been collected on the first spool. The advancing glass ribbon **72** is then directed to a second spool at which the glass ribbon is collected while the first spool is removed and replaced with an empty third spool that is used to collect the advancing glass ribbon once the second spool has collected a maximum amount of the glass ribbon.

Additional processing equipment can be located along the path of travel of the glass ribbon between the second location **100** and the third location **110.** In the example embodiment of **FIG. 3****,** the further processing equipment can comprise laser cutting equipment **108** that acts to cut away from the glass ribbon **72** the two lateral margins of the glass ribbon so as to finally produce a glass ribbon of uniform thickness across its width. A cullet collector is provided along with the laser cutting equipment into which the lateral margins of the glass ribbon are free to fall, or are otherwise collected, as they are removed from the glass ribbon.

It will be apparent to those skilled in the art that various modifications and variations can be made without departing from the spirit and scope of the claimed invention.

For example, although rollers were used for the guide apparatus and the backbending apparatus, a series of non-contact air bearings, or curved air bearing sections may be used instead thereof or in addition thereto. Further, alternatively, other manners of supporting and/or guiding the glass ribbon may be used.

Also, for example, although the glass ribbon is shown as being rolled by itself, an interleaf material may be rolled together with the glass ribbon so as to separate adjacent layers of the glass ribbon from one another whereby glass to glass contact is prevented.

## Claims

1. A method of processing a continuous glass ribbon comprising the steps of:
(I) drawing a portion of the glass ribbon from a forming member into a draw zone located downstream from the forming member so as to produce a first selected thickness in the glass ribbon;
(II) passing the portion of the glass ribbon having the first selected thickness through a transition zone to a first location downstream from the draw zone;
(III) reducing the thickness of the glass ribbon at the draw zone to a second selected thickness that is less than the first selected thickness while advancing the glass ribbon to the first location;
(IV) separating the glass ribbon at the first location after the second selected thickness is reached at the first location to create an initial leading end in the glass ribbon having the second selected thickness;
(V) feeding the initial leading end of the glass ribbon through the first location to a second location downstream from the first location;
(VI) reducing the thickness of the glass ribbon at the draw zone to a final predetermined thickness that is less than the second selected thickness while advancing the glass ribbon to the second location;
(VII) separating the glass ribbon at the second location after the final predetermined thickness is reached at the second location to create a final leading end in the glass ribbon having the final predetermined thickness; and
(VIII) passing the final leading end of the glass ribbon through the second location to a third location downstream from the second location,
wherein a travel path of the glass ribbon is changed from a draw direction in the draw zone to a transitional direction in the transition zone, and as the glass ribbon passes through the transition zone, an upstream area of the glass ribbon is bent such that a first surface of the glass ribbon is at the upstream area is in compression and a downstream area of the glass ribbon is bent such that the first surface of the glass ribbon at the downstream area is in tension, and
wherein the first surface of an intermediate area of the glass ribbon between the upstream area and the downstream area is substantially free of compressive and tensile forces.

2. The method of claim 1, wherein the glass ribbon having the final predetermined thickness is collected at the third location.

3. The method of claim 2, wherein collecting the glass ribbon comprises rolling the glass ribbon to form a roll of the glass ribbon.

## Patentansprüche

1. Verfahren zum Verarbeiten eines endlosen Glasbands, das die folgenden Schritte beinhaltet:
(I) Ziehen eines Abschnitts des Glasbands aus einem Formglied in eine Zugzone, die sich stromab vom Formglied befindet, um eine erste ausgewählte Dicke im Glasband zu produzieren;
(II) Durchlaufenlassen des Abschnitts des Glasbands, der die erste ausgewählte Dicke aufweist, durch eine Übergangszone zu einer ersten Stelle stromab von der Zugzone;
(III) Reduzieren der Dicke des Glasbands an der Zugzone auf eine zweite ausgewählte Dicke, die geringer als die erste ausgewählte Dicke ist, während das Glasband zur ersten Stelle vorwärtsbewegt wird;
(IV) Trennen des Glasbands an der ersten Stelle, nachdem die zweite ausgewählte Dicke an der ersten Stelle erreicht wird, um eine anfängliche Vorderkante im Glasband zu erzeugen,
die die zweite ausgewählte Dicke aufweist;
(V) Speisen der anfänglichen Vorderkante des Glasbands durch die erste Stelle zu einer zweiten Stelle stromab von der ersten Stelle;
(VI) Reduzieren der Dicke des Glasbands an der Zugzone auf eine endgültige vorbestimmte Dicke, die geringer als die zweite ausgewählte Dicke ist, während das Glasband zur zweiten Stelle vorwärtsbewegt wird;
(VII) Trennen des Glasbands an der zweiten Stelle, nachdem die endgültige vorbestimmte Dicke an der zweiten Stelle erreicht wird, um eine endgültige Vorderkante im Glasband zu erzeugen, die die endgültige vorbestimmte Dicke aufweist; und
(VIII) Durchlaufenlassen der endgültigen Vorderkante des Glasbands durch die zweite Stelle zu einer dritten Stelle stromab von der zweiten Stelle,
wobei ein Verfahrweg des Glasbands von einer Zugrichtung in der Zugzone zu einer Übergangsrichtung in der Übergangszone geändert wird und, wenn das Glasband durch die Übergangszone durchläuft, ein Stromaufbereich des Glasbands so gebogen wird, dass sich eine erste Oberfläche des Glasbands am Stromaufbereich befindet, in Kompression befindet und ein Stromabbereich des Glasbands so gebogen wird, dass sich die erste Oberfläche Glasbands am Stromabbereich in Spannung befindet, und
wobei die erste Oberfläche eines Zwischenbereichs des Glasbands zwischen dem Stromaufbereich und dem Stromabbereich im Wesentlichen frei von Druck- und Zugkräften ist.

2. Verfahren gemäß Anspruch 1, wobei das Glasband, das die endgültige vorbestimmte Dicke aufweist, an der dritten Stelle gesammelt wird.

3. Verfahren gemäß Anspruch 2, wobei das Sammeln des Glasbands das Rollen des Glasbands beinhaltet, um eine Rolle des Glasbands zu bilden.

## Revendications

1. Procédé de traitement d'un ruban continu de verre comprenant les étapes de :
(I) étirage d'une partie du ruban de verre à partir d'un élément de formation dans une zone d'étirage située en aval de l'élément de formation de façon à produire une première épaisseur choisie dans le ruban de verre ;
(II) passage de la partie de ruban de verre possédant la première épaisseur choisie à travers une zone de transition vers un premier emplacement en aval de la zone d'étirage ;
(III) réduction de l'épaisseur du ruban de verre au niveau de la zone d'étirage à une seconde épaisseur choisie qui est inférieure à la première épaisseur choisie tout en faisant progresser le ruban de verre vers le premier emplacement ;
(IV) séparation du ruban de verre au niveau du premier emplacement après que la seconde épaisseur choisie est atteinte au niveau du premier emplacement pour créer une extrémité avant initiale dans le ruban de verre possédant la seconde
épaisseur choisie ;
(V) apport de l'extrémité avant initiale du ruban de verre par l'intermédiaire du premier emplacement vers un deuxième emplacement en aval du premier emplacement ;
(VI) réduction de l'épaisseur du ruban de verre au niveau de la zone d'étirage à une épaisseur finale prédéfinie qui est inférieure à la seconde épaisseur choisie tout en faisant progresser le ruban de verre vers le deuxième emplacement ;
(VII) séparation du ruban de verre au niveau du deuxième emplacement après que l'épaisseur finale prédéfinie est atteinte au niveau du deuxième emplacement pour créer une extrémité avant finale dans le ruban de verre possédant l'épaisseur finale prédéfinie ; et
(VIII) passage de l'extrémité avant finale du ruban de verre par l'intermédiaire du deuxième emplacement vers un troisième emplacement en aval du deuxième emplacement,
un trajet de déplacement du ruban de verre étant modifié pour passer d'une direction d'étirage dans la zone d'étirage à une direction transitoire dans la zone de transition, et tandis que le ruban de verre passe dans la zone de transition, une section en amont du ruban de verre est pliée de sorte qu'une première surface du ruban de verre soit au niveau de la section en amont, soit comprimée et une section en aval du ruban de verre est pliée de sorte que la première surface du ruban de verre au niveau de la section en aval est tendue, et
ladite première surface d'une section intermédiaire du ruban de verre entre la section en amont et la section en aval étant essentiellement libre de forces de compression et de traction.

2. Procédé selon la revendication 1, ledit ruban de verre possédant l'épaisseur finale prédéfinie étant recueilli au niveau du troisième emplacement.

3. Procédé selon la revendication 2, la collecte du ruban de verre comprenant le roulage du ruban de verre afin de former un rouleau de ruban de verre.
